# EUROPEAN PATENT APPLICATION

(11) **EP 2 237 498 A1**
(43) Date of publication of application: **06.10.2010**
(21) Application number: 08800912.1
(22) Date of filing: 18.09.2008
(51) Int. Cl.: H04L 12/56

(54) **A METHOD, SYSTEM, GATEWAY DEVICE AND AUTHENTICATION SERVER FOR ALLOCATING MULTISERVICE RESOURCES**

(30) Priority: 04.02.2008 CN 200810065292
(71) Applicant: Huawei Technologies Co., Ltd., Longgang District, Shenzhen Guangdong 518129 (CN)
(72) Inventor: WANG, Jianbing c/o Huawei Technologies Co.Ltd., Int.Prop.Dept., 518129 Shenzhen (CN); HOU, Chao c/o Huawei Technologies Co.Ltd., Int.Prop.Dept., 518129 Shenzhen (CN); ZHANG, Xuejiang c/o Huawei Technologies Co.Ltd., Int.Prop.Dept., 518129 Shenzhen (CN); LI, Jianjun c/o Huawei Technologies Co.Ltd., Int.Prop.Dept., 518129 Shenzhen (CN); GUO, Jun c/o Huawei Technologies Co.Ltd., Int.Prop.Dept., 518129 Shenzhen (CN); SHEN, Ningguo c/o Huawei Technologies Co.Ltd., Int.Prop.Dept., 518129 Shenzhen (CN); ZHENG, Zhen c/o Huawei Technologies Co.Ltd., Int.Prop.Dept., 518129 Shenzhen (CN)
(74) Representative: Kreuz, Georg Maria
(86) International application number: PCT/CN2008/072418
(87) International publication number: WO 2009/097717

(57) **Abstract**

In the field of network communications, a method, a system, a gateway device, and an authentication server for allocating multi-service resources while multiple services of a same user access to a network are provided. The method includes the following steps. A service request message sent by a first service terminal is received. Service capability and user identification of the first service terminal and a count of available resources that corresponds to the user identification are obtained. Resources are allocated for the first service terminal based on the service capability and the user identification of the first service terminal and the count of the available resources that corresponds to the user identification. Thus, the configuration of the gateway device is simplified, and the scale deployment for different services is achieved.

## Description

### FIELD OF THE TECHNOLOGY

The present invention relates to the field of network communications, and more particularly to a method, a system, a gateway device, and an authentication server for allocating multi-service resources when multiple services of a same user access to a network.

### BACKGROUND OF THE INVENTION

It has gradually become a development trend of the network to provide multiple services in a same Internet Protocol (IP) bearer network. For example, voice, video, data, and other services are provided simultaneously in an IP network. With the wide deployment of services and diversification of users' demands, the Quality scheduling of Service (QoS) requirement based on family (or line) becomes especially important.

For example, a user A has subscribed to voice, video, and data services, and a total bandwidth of the line thereof is 7.6 Mbps. The voice service requires a bandwidth of at most 512 Kbps, the video service requires a bandwidth of at most 4 Mbps, and the data service requires a bandwidth of at most 7.6 Mbps.

During the implementation of the present invention, the inventor finds that the prior art at least has the following problems that need to be solved:
how to distinguish different services of a same user and how to allocate bandwidth among these services.

### SUMMARY OF THE INVENTION

Embodiments of the present invention are directed to a method, a system, a gateway device, and an authentication server for allocating multi-service resources, which are applicable to distinguish different services of a same user and allocate bandwidth among these services.

In an embodiment, the present invention provides a method for allocating multi-service resources, which includes the following steps. Receiving a service request message sent by a first service terminal. Obtaining service capability of the first service terminal, user identification of the first service terminal, and a count of available resources that corresponds to the user identification. Allocating resources for the first service terminal based on the service capability of the first service terminal, the user identification of the first service terminal, and the count of the available resources that corresponds to the user identification.

In an embodiment, the present invention provides a system for allocating multi-service resources, which includes a gateway device and an authentication server. The gateway device is configured to receive a service request message sent by a service terminal; obtain a service capability of the service terminal, a user identification of the service terminal, and a count of available resources that corresponds to the user identification according to the service request message; allocate resources for the service terminal based on the service capability of the service terminal, the user identification of the service terminal, and the count of the available resources that corresponds to the user identification. The authentication server is configured to provide the gateway device with the service capability of the service terminal, the user identification of the service terminal, and the count of the available resources that corresponds to the user identification.

In an embodiment, the present invention provides a gateway device, which includes a communication module, an obtaining module, and a scheduling module. The communication module is configured to receive a service request message sent by a first service terminal. The obtaining module is configured to obtain a service capability of the first service terminal, a user identification of the first service terminal, and a count of available resources that corresponds to the user identification. The scheduling module is configured to allocate resources for the first service terminal based on the service capability of the first service terminal, the user identification of the first service terminal, and the count of the available resources that corresponds to the user identification obtained by the obtaining module.

In an embodiment, the present invention provides an authentication server, which includes a communication module, a storage module, and an authentication module. The communication module is configured to receive an authentication request message. The storage module is configured to store a user information table; the user information table includes a service terminal, a service capability of the service terminal, a user identification of the service terminal, and a count of available resources that corresponds to the user identification. The authentication module is configured to parse terminal information of the service terminal from the authentication request message received by the communication module, authenticate the service terminal, obtain the service capability of the service terminal, the user identification of the service terminal, and the count of the available resources that corresponds to the user identification from the storage module after the service terminal passes the authentication successfully, and send the service capability of the service terminal, and the user identification of the service terminal, and the count of the available resources that corresponds to the user identification through the communication module.

Compared with the prior art, the embodiments of the present invention have the following advantages.

In the embodiments of the present invention, the server uniformly stores the user identification of the user, the service terminal of the user, and the service capability of the terminal. The preceding information is delivered to the gateway device whenever necessary, thereby enabling the gateway device to easily schedule the resources among different services of a same user. Thus, the configuration of the gateway device is simplified, which facilitates the wide deployment of different services.

### BRIEF DESCRIPTION OF THE DRAWINGS

To make the technical solutions of the embodiments of the present invention or the prior art clearer, the accompanying drawings for illustrating the embodiments or the prior art are outlined below. Apparently, the accompanying drawings in the description are just some of the present invention, and person having ordinary skill in the art can derive other accompanying drawings from such accompanying drawings without any creative effort.
FIG. 1 shows an application scenario in which multiple services are borne by a same bearer network according to an embodiment of the present invention;
FIG. 2 is a flow chart of a method for allocating multi-service resources according to an embodiment of the present invention;
FIG. 3 is a schematic structural view of a system for allocating multi-service resources according to an embodiment of the present invention;
FIG. 4 is a schematic structural view of a gateway device according to an embodiment of the present invention; and
FIG. 5 is a schematic structural view of an authentication server according to an embodiment of the present invention.

### DETAILED DESCRIPTION OF THE EMBODIMENTS

The technical solutions of the present invention are hereinafter described clearly and in detail with reference to the accompanying drawings of the embodiments of the present invention. It is evident that the described embodiments are only some of the embodiments of the present invention, but are not all the embodiments. Person having ordinary skill in the art may derive other embodiments from the embodiments given herein without creative work, and all such embodiments are covered in the scope of protection of the present invention.

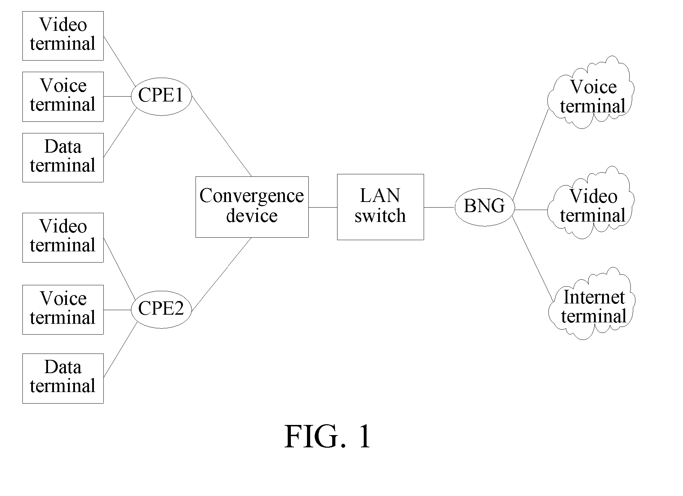

FIG. 1 shows an application scenario in which multiple services are borne by a same bearer network according to an embodiment of the present invention. As shown in FIG.1, a plurality of service terminals (only a voice terminal, a video terminal, and a common data service terminal are taken as examples in FIG. 1) of a user is connected to a convergence device through customer premise equipment (CPE). The convergence device may be a digital subscriber line access multiplexer (DSLAM). The convergence device enables users to be converged in a broadband network gateway (BNG) through a switch. A local area network (LAN) switch is shown in FIG. 1.

Under such networking, the CPE may set different visual local area network (VLAN) tags or the same VLAN tag for different service terminals of each user. The convergence device then sets outer VLAN tags for each service terminal. Therefore, the network connection of each user may be regarded as one line.

The convergence devices, such as DSLAM, usually process packets only based on a priority level of the VLAN, instead of scheduling the services based on the user (or the line). Usually, the BNG schedules the services based on user (or line).

The BNG schedules the services based on user (or line) in the following modes.
1. Scheduling based on a same VLAN. The BNG regards service terminals that get online via the same VLAN as the service terminals of a same user (that is, the CPE sets the same VLAN tag for different service terminals of each user), to schedule the service terminals uniformly.
2. Scheduling based on line identification. The convergence device determines a line identification (or location information of the user) for each service terminal through Option 82 or PPPoE Circuit ID. The BNG regards service terminals having the same line identification (location information of the user) as different services of the same user, and schedule them uniformly.

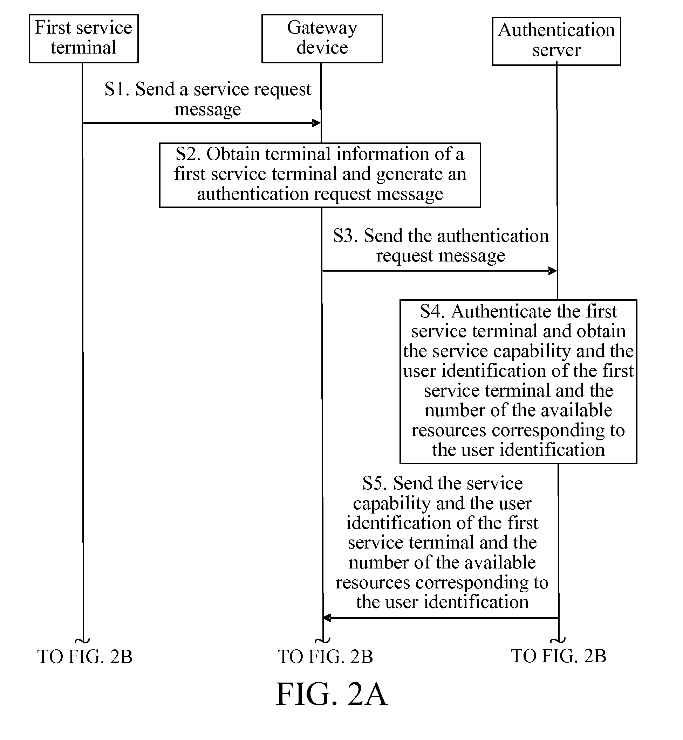

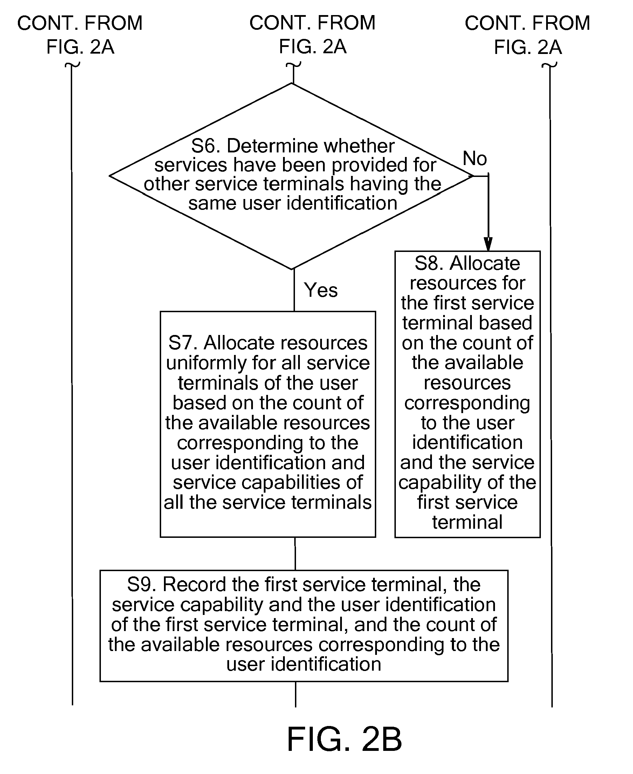

FIG. 2 is a flow chart of a method for scheduling multiple services according to an embodiment of the present invention. As shown in FIG.2, to implement this method, an authentication server firstly needs to be configured with a service terminal, a service capability of the service terminal, a user identification of the service terminal, and a count of available resources that corresponds to the user identification. The method includes the following steps.

In step S1, a first service terminal sends a service request message to a gateway device.

Specifically, the gateway device may be a BNG, and the first service terminal initiates the service request message through an access device, such as a CPE.

In step S2, after receiving the service request message sent by the first service terminal, the BNG obtains terminal information of the first service terminal according to the service request message, and generates an authentication request message, the authentication request message carries the terminal information of the first service terminal.

The terminal information includes one or more of: a Media Access Control (MAC) address, a terminal account, a VLAN tag, a IEEE 802.1Q in 802.1Q (QinQ) tag, Option 82, device ID, which is not limited herein.

In step S3, the BNG sends the generated authentication request message to an authentication server.

Different from a common server, the authentication server is configured with a service terminal, a service capability of the service terminal, a user identification of the service terminal, and a count of available resources that corresponds to the user identification.

In step S4, after receiving the authentication request message, the authentication server obtains the terminal information of the first service terminal from the authentication request message, and authenticates the first service terminal according to the terminal information. After the first service terminal passes the authentication, the authentication server searches for the service capability of the first service terminal, and the user identification of the first service terminal, and the count of the available resources that corresponds to the user identification stores by the authentication server itself.

The service capability of the service terminal may include a required bandwidth, a priority level of the service.

In step S5, the authentication server sends, to the BNG, the service capability of the first service terminal, and the user identification of the first service terminal, and the count of the available resources that corresponds to the user identification obtained through searching.

In step S6, the BNG determines whether other service terminals having the same user identification have been allocated resources.. If other service terminals having the same user identification have been allocated resources, step S7 is performed; if other service terminals having the same user identification have not been allocated resources, step S8 is performed.

Specifically, after receiving the service capability of the first service terminal, the user identification of the first service terminal, and the count of the available resources that corresponds to the user identification sent by the authentication server, the BNG looks up a local service information table to determine whether the user identification and other service terminals corresponding to the user identification are stored in the local service information table. If other service terminals corresponding to the user identification have been stored in the local service information table, it indicates that the BNG has allocated resources to other service terminals before.

The service information table records the service terminal allocated with resources, the service capability of the service terminal, the user identification of the service terminal, and the count of the available resources that corresponds to the user identification.

In step S7, the BNG uniformly allocates resources for all service terminals corresponding to the user identification based on the count of the available resources that corresponds to the user identification, and service capability of the first service terminal and service capability of other service terminals.

In steps S6 and S7, the service terminals that receive resources from the BNG may not be limited to two service terminals having the same user identification, but may be a plurality of service terminals having the same user identification. That is, the service information table stored on the BNG may have recorded the circumstance that a plurality of service terminals having the same user identification is allocated with resources. For example, a user A has subscribed to voice, video, and data services, and a total bandwidth of the line thereof is 7.6 Mbps. The voice service requires a bandwidth of at most 512 Kbps, the video service requires a bandwidth of at most 4 Mbps, and the data service requires a bandwidth of at most 7.6 Mbps. In addition, the priority level of the voice service is at the highest level, the priority level of the video service is at the second highest level, and the priority level of the data service is at the lowest level. When a voice service terminal of the user A gets online, the BNG finds that the video service (4 Mbps) and the data service (3.6 Mbps) have been provided for the user A simultaneously. At this time, the BNG needs to re-allocate the bandwidth among the three services based on the priority levels and the bandwidth requirements of the three services. As a result, the voice service occupies a bandwidth of 512 Kbps, the video service occupies a bandwidth of 4 Mbps, and the data service occupies a bandwidth of 3 Mbps.

In step S8, the BNG allocates the resources for the first service terminal based on the count of the available resources that corresponds to the user identification, and the service capability of the first service terminal.

In step S9, the BNG records the first service terminal, the service capability of the first service terminal, and the user identification of the first service terminal, and the count of the available resources that corresponds to the user identification in the service information table.

The method in the embodiment of the present invention further includes the following steps. When the first service terminal gets offline, the BNG deletes the records associated with the first service terminal from the service information table. Moreover, when the first service terminal gets offline, if other service terminals having the same user identification as the first service terminal are still online, the BNG may re-allocate the resources to other service terminals based on the count of the resources that corresponds to the user identification and the service capabilities of other service terminals.

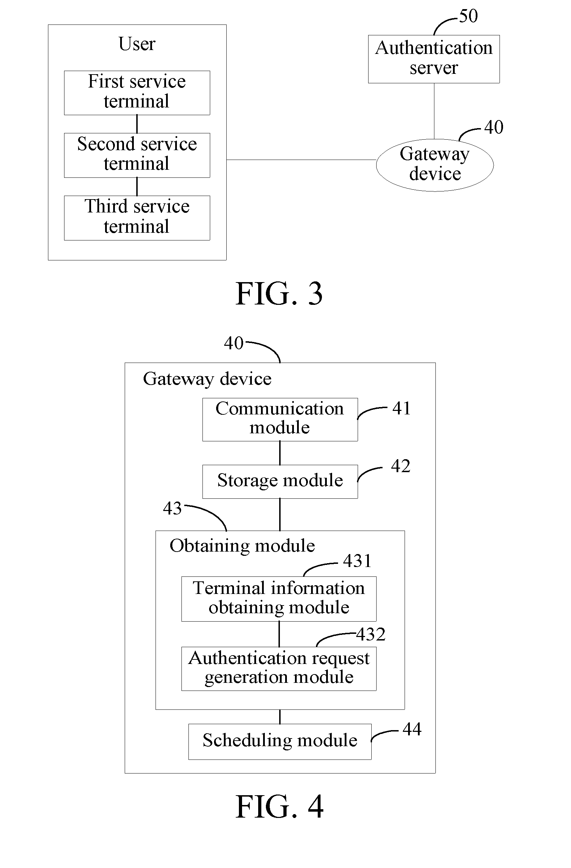

FIG. 3 is a schematic structural view of a system for allocating multi-service resources according to an embodiment of the present invention. As shown in FIG. 3, service terminals of the user in this embodiment may be connected to a BNG through a CPE, a convergence device, and a LAN switch in the manner as shown in FIG. 1.

The system for allocating multi-service resources in this embodiment includes a gateway device 40 and an authentication server 50.

The gateway device 40 is configured to receive a service request message sent by a service terminal, obtain a service capability of the service terminal, and a user identification of the service terminal, and a count of available resources that corresponds to the user identification according to the service request message; allocate resources for the service terminal based on the service capability of the service terminal, and the user identification of the service terminal, and the count of the available resources that corresponds to the user identification.

Specifically, the gateway device 40 obtains the service capability of the service terminal, the user identification of the service terminal, and the count of the available resources that corresponds to the user identification by sending an authentication request message to the authentication server 50, the authentication request message carries terminal information of the service terminal in the authentication request message; uniformly allocates the resources for each service terminal corresponding to the user identification based on the user identification, the count of the available resources that corresponds to the user identification, and the service capability of each service terminal corresponding to the user identification; and records the service terminal, the service capability of the service terminal, and the user identification of the service terminal, and the count of the available resources that corresponds to the user identification after allocating the resources for the service terminal.

The authentication server 50 is configured to provide the service capability of the service terminal, and the user identification of the service terminal, and the count of the available resources that corresponds to the user identification to the gateway device 40. Specifically, after the service terminal passes an authentication successfully, the authentication server 50 provides the service capability of the service terminal, and the user identification of the service terminal, and the count of the available resources that corresponds to the user identification, to the gateway device 40 by searching among the information stored by the authentication server 50 itself.

The gateway device 40 in this embodiment may be a BNG, and the authentication server 50 in this embodiment may be a Remote Authentication Dial In User Service (Radius), or a Terminal Access Controller Access Control System (TACACS), or a Common Open Policy Service (COPS).

FIG. 4 is a schematic structural view of a gateway device according to an embodiment of the present invention. As shown in FIG.4, the gateway device 40 includes a communication module 41 and an obtaining module 43.

The communication module 41 is configured to receive a service request message sent by a first service terminal, and send an authentication request message.

The obtaining module 43 is configured to obtain a service capability of the first service terminal, and a user identification of the first service terminal, and a count of available resources that corresponds to the user identification; generate an authentication request message according to terminal information of the first service terminal, and send the authentication request message through the communication module 41.

The obtaining module 43 includes a terminal information obtaining module 431 and an authentication request generation module 432.

The terminal information obtaining module 431 is configured to obtain the terminal information of the first service terminal according to the service request message received by the communication module 41.

The authentication request generation module 432 is configured to generate the authentication request message according to the terminal information of the first service terminal, and send the authentication request message through the communication module 41.

The gateway device 40 may further include a scheduling module 44. The scheduling module 44 is configured to allocate resources for the first service terminal based on the service capability of the first service terminal, and the user identification of the first service terminal, and the count of the available resources that corresponds to the user identification obtained by the obtaining module 43.

The scheduling module 44 allocates resources for the first service terminal based on the service capability of the first service terminal, and the user identification of the first service terminal, and the count of the available resources that corresponds to the user identification obtained by the obtaining module through the following step. The scheduling module 44 determines whether the resources have been allocated for other service terminals having the same user identification as the first service terminal. If the resources have been allocated for other service terminals having the same user identification as the first service terminal, the resources are allocated uniformly for all service terminals corresponding to the user identification based on the count of the available resources that corresponds to the user identification, and service capability of the first service terminal and service capability of other service terminals; if the resources have not been allocated for other service terminals having the same user identification as the first service terminal, the resources are allocated for the first service terminal based on the count of the available resources that corresponds to the user identification, and the service capability of the first service terminal.

The gateway device 40 may further include: a storage module 42. The storage module 42 is configured to store a service information table. The service information table records the first service terminal allocated with resources, the service capability of the first service terminal, the user identification of the first service terminal, and the count of the available resources that corresponds to the user identification.

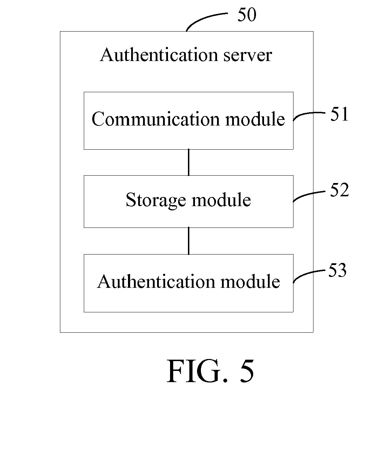

FIG. 5 is a schematic structural view of the authentication server 50 according to an embodiment of the present invention. As shown in FIG.5, the authentication server 50 includes a communication module 51, a storage module 52, and an authentication module 53.

The communication module 51 is configured to receive an authentication request message.

The storage module 52 is configured to store a user information table; the user information table includes a service terminal, a service capability of the service terminal, a user identification of the service terminal, and a count of available resources that corresponds to the user identification.

The authentication module 53 is configured to parse terminal information of the service terminal from the authentication request message received by the communication module 51; authenticate the service terminal; obtain the service capability of the service terminal, and the user identification of the service terminal and the count of the available resources that corresponds to the user identification from the storage module 52 after the service terminal passes authentication successfully; and send the service capability of the service terminal, and the user identification of the service terminal, and the count of the available resources that corresponds to the user identification through the communication module 51.

In the above embodiments of the present invention, the user identification of the user, the service terminal of the user, and the service capability of the terminal are uniformly stored by the server. The information is delivered to the gateway device whenever necessary, thereby enabling the gateway device to easily schedule the resources among different services of a same user. Thus, the configuration of the gateway device is simplified, which facilitates the wide deployment of different services.

Through the descriptions of the preceding embodiments, those skilled in the art may understand that the present invention may be implemented by hardware, or the present invention may be implemented by software and a necessary universal hardware platform. Based on such understandings, the technical solutions under the present invention may be embodied in the form of a software product. The software product may be stored in a nonvolatile storage medium, which may be a Compact Disk Read-Only Memory (CD-ROM), a USB flash disk, or a removable hard drive. The software product includes a number of instructions that enable a computer device (a personal computer, or a server, or a network device) to execute the methods provided in the embodiments of the present invention.

To sum up, the above descriptions are only preferred embodiments of the present invention, and the invention is not limited to such embodiments. Any modification, equivalent replacement, or improvement made without departing from the principle of the present invention should fall within the scope of protection of the present invention.

## Claims

1. A method for allocating multi-service resources, comprising:
receiving a service request message sent by a first service terminal;
obtaining a service capability of the first service terminal, and a user identification of the first service terminal, and a count of available resources that corresponds to the user identification; and
allocating resources for the first service terminal based on the service capability of the first service terminal, and the user identification of the first service terminal, and the count of the available resources that corresponds to the user identification.

2. The method according to claim 1, wherein the obtaining the service capability of the first service terminal, and the user identification of the first service terminal, and the count of the available resources that corresponds to the user identification comprises:
obtaining terminal information of the first service terminal according to the service request message;
sending an authentication request message to an authentication server, wherein the authentication request message carries the terminal information of the first service terminal; and
receiving the service capability of the first service terminal, and the user identification of the first service terminal, and the count of the available resources that corresponds to the user identification sent by the authentication server.

3. The method according to claim 2, further comprising:
authenticating, by the authentication server, the first service terminal according to the terminal information of the first service terminal after the authentication server receives the authentication request message; and
searching for and sending, by the authentication server, the service capability of the first service terminal, and the user identification of the first service terminal, and the count of the available resources that corresponds to the user identification stored by the authentication server itself after the first service terminal passes authentication.

4. The method according to claim 1, wherein the allocating the resources for the first service terminal based on the service capability of the first service terminal, and the user identification of the first service terminal, and the count of the available resources that corresponds to the user identification, comprises:
determining whether resources have been allocated to other service terminals having the same user identification as the first service terminal, if resources have been allocated for other service terminals, allocating resources uniformly for all service terminals corresponding to the user identification based on the count of the available resources that corresponds to the user identification and service capability of the first service terminal and service capability of other service terminals; if resources have not been allocated to other service terminals, allocating resources for the first service terminal based on the count of the available resources that corresponds to the user identification and the service capability of the first service terminal.

5. The method according to claim 4, further comprising:
recording the first service terminal, the service capability of the first service terminal, and the user identification of the first service terminal, and the count of the available resources that corresponds to the user identification.

6. The method according to claim 5, further comprising:
deleting the recorded first service terminal, and service capability of the first service terminal, and user identification of the first service terminal, and count of the available resources that corresponds to the user identification when the first service terminal gets offline.

7. The method according to any one of claims 1 to 6, wherein
the terminal information comprises one or more of: a Media Access Control (MAC) address, a terminal account, a virtual local area network (VLAN) tag, a QinQ tag, an Option 82, and a device identifier (ID); and
the service capability of the service terminal comprises information of a bandwidth of the service terminal and/or a priority level.

8. A system for allocating multi-service resources, comprising a gateway device and an authentication server, wherein:
the gateway device is configured to receive a service request message sent by a service terminal; obtain a service capability of the service terminal, and a user identification of the service terminal, and a count of available resources that corresponds to the user identification according to the service request message; allocate resources for the service terminal based on the service capability of the service terminal, and the user identification of the service terminal, and the count of the available resources that corresponds to the user identification; and
the authentication server is configured to provide the gateway device with the service capability of the service terminal, and the user identification of the service terminal, and the count of the available resources that corresponds to the user identification.

9. The system for allocating multi-service resources according to claim 8, wherein the gateway device obtains the service capability of the service terminal, and the user identification of the service terminal, and the count of the available resources that corresponds to the user identification by sending an authentication request message to the authentication server and carrying terminal information of the service terminal in the authentication request message.

10. The system for allocating multi-service resources according to claim 9, wherein the authentication server provides the gateway device with the service capability of the service terminal, and the user identification of the service terminal, and the count of the available resources that corresponds to the user identification by searching among information stored by the authentication server itself after the service terminal passes authentication successfully.

11. The system for allocating multi-service resources according to claim 8, wherein the gateway device uniformly allocates resources for all service terminals corresponding to the user identification based on the user identification, the count of the available resources that corresponds to the user identification, and a service capability of each of the service terminals corresponding to the user identification.

12. The system for allocating multi-service resources according to claim 8, wherein the gateway device records the service terminal, the service capability of the service terminal, and the user identification of the service terminal, and the count of the available resources that corresponds to the user identification after allocating the resources for the service terminal.

13. A gateway device, comprising:
a communication module, configured to receive a service request message sent by a first service terminal;
an obtaining module, configured to obtain a service capability of the first service terminal, and a user identification of the first service terminal, and a count of available resources that corresponds to the user identification; and
a scheduling module, configured to allocate resources for the first service terminal based on the service capability of the first service terminal, and the user identification of the first service terminal, and the count of the available resources that corresponds to the user identification obtained by the obtaining module.

14. The gateway device according to claim 13, wherein the obtaining module comprises:
a terminal information obtaining module, configured to obtain terminal information of the first service terminal according to the service request message received by the communication module; and
an authentication request generation module, configured to generate an authentication request message according to the terminal information of the first service terminal, and send the authentication request message through the communication module.

15. The gateway device according to claim 13, wherein
the scheduling module allocates resources for the first service terminal based on the service capability of the first service terminal, and the user identification of the first service terminal, and the count of the available resources that corresponds to the user identification obtained by the obtaining module, comprises: determining whether resources have been allocated to other service terminals having the same user identification as the first service terminal, if resources have been allocated to other service terminals having the same user identification as the first service terminal, allocating resources uniformly for all service terminals corresponding to the user identification based on the count of the available resources that corresponds to the user identification and service capability of the first service terminal and service capability of other service terminals; if resources have not been allocated to other service terminals having the same user identification as the first service terminal, allocating resources for the first service terminal based on the count of the available resources that corresponds to the user identification, and the service capability of the first service terminal.

16. The gateway device according to claim 13, further comprising:
a storage module, configured to store a service information table, wherein the service information table records the service terminal allocated with resources, the service capability of the service terminal, the user identification of the service terminal, and the count of the available resources that corresponds to the user identification.

17. An authentication server, comprising:
a communication module, configured to receive an authentication request message;
a storage module, configured to store a user information table, wherein the user information table comprises a service terminal, a service capability of the service terminal, a user identification of the service terminal, and a count of available resources that corresponds to the user identification; and
an authentication module, configured to parse terminal information of the service terminal from the authentication request message received by the communication module; authenticate the service terminal; obtain the service capability of the service terminal, and the user identification of the service terminal, and the count of the available resources that corresponds to the user identification from the storage module after the service terminal passes authentication successfully; and send the service capability of the service terminal, and the user identification of the service terminal, and the count of the available resources that corresponds to the user identification through the communication module.
